# EUROPÄISCHE PATENTSCHRIFT

(11) **EP 3 131 070 B1**
(45) Veröffentlichungstag und Bekanntmachung des Hinweises auf die Patenterteilung: **11.10.2023**
(21) Anmeldenummer: 16184003.8
(22) Anmeldetag: 12.08.2016
(51) Int. Cl.: G07D 7/20, G01N 21/00, G01N 21/25, G01N 21/84, G06T 7/00, G07D 7/12, G01N 21/958

(54) **VORRICHTUNG ZUM PRÜFEN EINER BESCHICHTUNG EINES DOKUMENTES**
DEVICE FOR TESTING A COATING OF A DOCUMENT
DISPOSITIF DE CONTROLE D'UN REVETEMENT D'UN DOCUMENT

(30) Priorität: 14.08.2015 DE 102015113469
(43) Veröffentlichungstag der Anmeldung: 15.02.2017
(73) Patentinhaber: Bundesdruckerei GmbH, 10969 Berlin (DE)
(72) Erfinder: GRIESER, Ralf, 10589 Berlin (DE); HAGEN, Andre, 12349 Berlin (DE)
(74) Vertreter: Patentship Patentanwaltsgesellschaft mbH

(56) Entgegenhaltungen:
- EP-A1- 1 496 479
- DE-A1- 2 055 594
- DE-A1-102009 037 553
- DE-A1-102011 051 781
- US-A- 4 183 665

## Beschreibung

Die vorliegende Erfindung betrifft das Gebiet der Herstellung von Dokumenten.

Dokumente, wie Personalausweise oder Führerscheine, weisen üblicherweise auf ihrer Oberfläche eine dünne Beschichtung, insbesondere eine Lackschicht, auf. Diese Beschichtung wird meist bei der Herstellung der Dokumente aufgebracht und dient der Versiegelung und dem Schutz der Dokumente. Aufgrund der geringen Schichtdicke der Beschichtung ist eine Prüfung oder Inspektion der Beschichtung schwierig.

Die Offenlegungsschrift DE 20 55 594 A1 zeigt ein Verfahren und eine Vorrichtung zum Betrachten von Gegenständen.

Die Patentschrift US 4,183,665 zeigt eine Vorrichtung zur Sicherheitsvalidierung von Banknoten.

Die Offenlegungsschrift EP 1 496 479 A1 zeigt ein Lesegerät zur automatischen Prüfung der Echtheit von Dokumenten.

Die Offenlegungsschrift DE 10 2011 051 781 A1 zeigt eine deflektometrische Anordnung zur Oberflächeninspektion.

Die Offenlegungsschrift DE 10 2009 037 553 A1 zeigt eine gattungsgemäße Vorrichtung zur Detektion von transparenten Schutzschichten auf Substraten.

Es ist daher die Aufgabe der vorliegenden Erfindung, ein effizientes Konzept zum Prüfen einer Beschichtung eines Dokumentes zu schaffen.

Diese Aufgabe wird durch die Merkmale der unabhängigen Ansprüche gelöst. Vorteilhafte Weiterbildungsformen sind Gegenstand der abhängigen Patentansprüche, der Beschreibung sowie der Zeichnungen.

Die vorliegende Erfindung basiert auf der Erkenntnis, dass die obige Aufgabe durch die Aufnahme einer an einem Dokument reflektierten Abbildung einer Teststruktur sowie durch die Ermittlung eines Bildparameters dieser Aufnahme gelöst werden kann.

Gemäß einem ersten Aspekt betrifft die Erfindung eine Vorrichtung nach Anspruch 1. Dadurch wird der Vorteil erreicht, dass mit der Vorrichtung die Beschichtung des Dokumentes effektiv und berührungslos während des Herstellungsprozesses geprüft werden kann.

Die Bildaufnahme der Teststruktur erfolgt mittels des Bildsensors.

Das Dokument kann eines der folgenden Dokumente sein: Identitätsdokument, wie Personalausweis, Reisepass, Zugangskontrollausweis, Berechtigungsausweis, Unternehmensausweis, Steuerzeichen oder Ticket, Führerschein oder Kraftfahrzeugausweis, Wertdokument, Zahlungsmittel, beispielsweise eine Bankkarte oder Kreditkarte. Das Dokument kann Sicherheitsmerkmale, beispielsweise Hologramme, Wasserzeichen, Mikroschriften oder optisch veränderliche Tinte, umfassen. Das Dokument kann ein- oder mehrlagig bzw. papier- und/oder kunststoffbasiert sein. Das Dokument kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen. Ferner kann das Dokument aus Polycarbonat gefertigt sein.

Bei der Beschichtung kann es sich um eine Lackschicht oder einen Lackauftrag zum Schutz vor Verschleiß und/oder Verschmutzung des Dokumentes sowie zur Erhöhung der Lebensdauer handeln. Die Beschichtung kann das Dokument vor UV-Strahlung schützen. Ferner kann die Beschichtung lichttransparent oder teilweise lichttransparent sein.

Die Beleuchtungseinrichtung kann eine Lichtquelle umfassen, welche in einem Gehäuse angeordnet ist. Das Gehäuse kann an einer der Teststruktur zugewandten Seite einen Durchbruch zur Emission eines auf die Teststruktur gerichteten Lichtstrahles aufweisen. Die Teststruktur kann an diesem Durchbruch angeordnet sein.

Die Halterung kann eine Ablagefläche mit einer Vertiefung für das Dokument umfassen. Ferner kann die Halterung eine Befestigungsvorrichtung, beispielsweise eine Klammer oder einen Einschub, für das Dokument umfassen. Die Halterung kann in einem solchen Abstand zu der Beleuchtungseinrichtung angeordnet sein, dass das strukturierte Licht das Dokumentes vollflächig beleuchtet oder nur einen bestimmten Bereich des Dokumentes, beispielsweise den Bereich eines Lichtbildes, beleuchtet.

Der Prozessor kann ein Mikroprozessor sein und kann einen Speicher umfassen. Ferner kann der Prozessor in ein an die Vorrichtung angeschlossenes Datenverarbeitungsgerät, beispielsweise ein Desktop-Computer oder ein Laptop, integriert sein.

Gemäß einer Ausführungsform ist die Beleuchtungseinrichtung ausgebildet, die Teststruktur zu durchleuchten, d.h. derart zu beleuchten, dass die Teststruktur durchleuchtet wird. Hierbei wird Licht durch die Teststruktur hindurch gesendet, wodurch das Licht strukturiert wird. Die Beleuchtungseinrichtung kann die Teststruktur jedoch derart beleuchten, dass das strukturierte Licht durch eine Reflexion des einfallenden Lichtes an der Teststruktur erhalten wird.

Gemäß einer Ausführungsform umfasst die Beleuchtungseinrichtung eine Infrarotlichtquelle, insbesondere eine thermische Infrarotlichtquelle, wobei der Bildsensor ein infrarotsensitiver Bildsensor ist. Dadurch wird der Vorteil erreicht, dass die Bildaufnahme nicht durch gestreutes Weißlich verfälscht wird.

Die Infrarotlichtquelle kann eine thermische Lichtquelle, eine LED oder ein Laser sein. Die thermische Lichtquelle kann eine Glühwendel, ein Glühdraht oder ein Glühstab aus hitzebeständigen Materialien, beispielsweise Wolfram oder Siliziumcarbid, sein. Die Infrarotlichtquelle und der Bildsensoren können für die Abstrahlung beziehungsweise die Detektion von Licht im nahen Infrarot zwischen 700 nm und 3000 nm ausgelegt sein.

Gemäß einer Ausführungsform umfasst die Beleuchtungseinrichtung eine reflektierende Anordnung, insbesondere eine Parabolspiegelanordnung, um das strukturierte Licht auszurichten. Dadurch wird der Vorteil erreicht, dass die Intensität des auf dem Bildsensor auftreffenden reflektierten Lichtes verstärkt werden kann und somit die Bildqualität der Bildaufnahme verbessert werden kann.

Die reflektierende Anordnung kann ein die Beleuchtungseinrichtung zumindest teilweise umgebender Parabolspiegel oder Hohlspiegel sein, welcher das von der Beleuchtungseinrichtung emittierte Licht auf die Teststruktur ausrichtet. Ferner kann die reflektierende Anordnung mehrere zusammengesetzte Spiegeln oder Reflektoren umfassen, welche die Beleuchtungseinrichtung teilweise umgeben. Bei der Beleuchtungseinrichtung kann es sich ferner um eine Lampe mit reflektierendem Schirm, beispielsweise eine Schreibtischlampe, handeln.

Gemäß der Erfindung ist die Teststruktur ein Gitter, insbesondere ein Transmissionsgitter oder ein Liniengitter mit einen konstanten oder einem variablen Linienabstand. Dadurch wird der Vorteil erreicht, dass das strukturierte Licht, welches durch die Beleuchtung der Teststruktur entsteht, ebenfalls eine regelmäßige Gitterstruktur aufweist. Durch die regelmäßige Struktur des strukturierten Lichtes kann eine effiziente und präzise Ermittlung des Bildparameters erfolgen.

Gemäß einer Ausführungsform umfasst die Vorrichtung einen optischen Filter, insbesondere einen Hochpassfilter, einen Tiefpassfilter oder einen Bandpassfilter, um das strukturierte Licht zu filtern oder spektral zu formen. Dadurch wird der Vorteil erreicht, dass das Spektrum des strukturierten Lichtes auf einen Detektionsbereich des Bildsensors eingeschränkt werden kann und die ungewollte Detektion von Umgebungslicht, insbesondere gestreutem Weißlich, vermieden werden kann.

Gemäß einer Ausführungsform umfasst die Vorrichtung ein Objektiv, welches dem Bildsensor vorgelagert ist, und mit welchem eine fokussierte Abbildung der Teststruktur auf dem Bildsensor erzeugt wird. Dadurch wird der Vorteil erreicht, dass eine optimal fokussierte Abbildung der Teststruktur in dem Bildsensor erfolgen kann und somit der Bildparameter besonders effizient ermittelt werden kann.

Gemäß einer Ausführungsform ist das Objektiv ausgebildet die Oberfläche des Dokumentes und/oder die Oberfläche der Beschichtung des Dokumentes auf dem Bildsensor zu defokussieren. Dadurch wird der Vorteil erreicht, dass die Abbildung der Teststruktur nicht durch eine Abbildung der Oberfläche des Dokumentes verfälscht wird. Gemäß einer Ausführungsform sind der Bildsensor und das Objektiv in einer Bildkamera angeordnet. Dadurch wird der Vorteil erreicht, dass eine vereinfachte Herstellung der Vorrichtung erfolgen kann.

Bei der Bildkamera kann es sich um eine Digitalkamera, eine digitale Spiegelreflexkamera, oder ein Smartphone mit integriertem Bildsensor handeln. Die Bildkamera kann mit einem Datenverarbeitungsgerät, beispielsweise einem Desktop-Computer oder einen Laptop, zur Übermittlung der Bildaufnahme verbunden sein.

Gemäß einer Ausführungsform ist der Bildsensor ein Halbleitersensor, insbesondere ein CCD-Sensor. Dadurch wird der Vorteil erreicht, dass eine besonders kostengünstige Herstellung der Vorrichtung ermöglicht wird.

Gemäß der Erfindung ist der Prozessor ausgebildet, die Beschichtung zu detektieren, falls der Bildparameter und der Referenzparameter unterschiedlich sind, insbesondere falls der Bildparameter geringer als der Referenzparameter ist. Dadurch wird der Vorteil erreicht, dass eine effiziente Detektion der Beschichtung über den Vergleich des Bildparameters mit dem Referenzparameter erfolgen kann.

Gemäß der Erfindung ist der Prozessor ausgebildet, aus dem Unterschied zwischen dem Bildparameter und dem Referenzparameter eine Schichtdicke der Beschichtung des Dokumentes zu ermitteln. Dadurch wir der Vorteil erreicht, dass zusätzlich zur Detektion der Beschichtung die Schichtdicke der Beschichtung effizient ermittelt werden kann.

Gemäß der Erfindung ist der Bildparameter einem Bildabschnitt der Bildaufnahme zugeordnet, wobei der Prozessor ausgebildet ist, einen weiteren Bildparameter eines weiteren Bildabschnitts der Bildaufnahme der Teststruktur zu bestimmen, und wobei der Prozessor ausgebildet ist, den Bildparameter und den weiteren Bildparameter mit dem Referenzparameter zu vergleichen, um die Verteilung oder die Homogenität einer Schichtdicke der Beschichtung des Dokumentes zu prüfen. Dadurch wird der Vorteil erreicht, dass die Homogenität der Beschichtung des Dokumentes mit einer Bildaufnahme effizient ermittelt werden kann.

Gemäß der Erfindung ist in die Halterung benachbart zum Dokument zumindest eine unbeschichtete Referenzfläche einsetzbar, wobei ein erster Bildabschnitt der Bildaufnahme dem Dokument zugeordnet ist, wobei ein zweiter Bildabschnitt der Bildaufnahme der unbeschichteten Referenzfläche zugeordnet ist, und wobei der Prozessor ausgebildet ist, den Referenzparameter als Bildparameter des zweiten Bildabschnitts zu bestimmen. Dadurch wird der Vorteil erreicht, dass die Bestimmung des Bildparameters und des Referenzparameters mit einer Bildaufnahme und/oder unter gleichen Bedingungen erfolgen kann. Die unbeschichtete Referenzfläche ist ein unbeschichtetes Dokument, d.h. ein Dokument ohne Beschichtung, sein.

Gemäß einer Ausführungsform weist die Vorrichtung eine Anzeige zum Anzeigen einer Detektion der Beschichtung oder eines Beschichtungsfehlers auf. Dadurch wird der Vorteil erreicht, dass ein Benutzer effizient über die Detektion der Beschichtung informiert werden kann.

Bei der Anzeige kann es sich um eine Leuchtanzeige oder ein Display, beispielsweise ein LCD-Display, ein OLED-Display oder ein Foliendisplay, handeln.

Gemäß einer Ausführungsform ist der jeweilige Bildparameter zumindest einer der folgenden Bildparamater: Bildschärfe, Bildkontrast, Bildhelligkeit, Fourier-Transformation. Dadurch wird der Vorteil erreicht, dass eine effiziente Auswertung der Bildaufnahme erfolgen kann. Gemäß der Erfindung ist der jeweilige Bildparameter eine Modulationsübertragungsfunktion

Handelt es sich bei dem Bildparameter um eine Modulationsübertragungsfunktion, so wird ein Kontrastverlust in der Abbildung der Teststruktur aufgrund der Beschichtung ermittelt. Hierzu wird ein Kontrastverlauf in der Abbildung der Teststruktur analysiert. Diese Analyse wird mit einem Dokument mit Beschichtung und einem Dokument ohne Beschichtung vorgenommen. Der Bildparameter des Dokuments ohne Beschichtung wird bei dieser Analyse als Referenzparameter verwendet.

Gemäß einem zweiten Aspekt betrifft die Erfindung ein Verfahren nach Anspruch 10.

Gemäß der Erfindung ist der Referenzparameter ein Bildparameter einer Bildaufnahme einer beschichtungsfreien Referenzfläche, und zwar eines oder des Dokumentes ohne Beschichtung. Dadurch wird der Vorteil erreicht, dass der Referenzparameter effizient bestimmt werden kann, und dass die Unterschiede zwischen dem Referenzparameter und dem Bildparameter des Dokumentes durch die Beschichtung des Dokumentes verursacht werden.

Gemäß der Erfindung wird aus dem Unterschied zwischen dem Bildparameter und dem Referenzparameter eine Schichtdicke der Beschichtung des Dokumentes ermittelt. Dadurch wir der Vorteil erreicht, dass zusätzlich zur Detektion der Beschichtung die Schichtdicke der Beschichtung effizient ermittelt werden kann.

Gemäß der Erfindung ist der Bildparameter einem Bildabschnitt der Bildaufnahme zugeordnet, wobei ein weiterer Bildparameter eines weiteren Bildabschnitts der Bildaufnahme der Teststruktur bestimmt wird, und wobei der Bildparameter und der weiteren Bildparameter mit dem Referenzparameter verglichen werden, um die Verteilung oder die Homogenität einer Schichtdicke der Beschichtung des Dokumentes zu prüfen. Dadurch wird der Vorteil erreicht, dass die Homogenität der Beschichtung des Dokumentes mit einer Bildaufnahme effizient ermittelt werden kann.

Gemäß der Erfindung wird benachbart zum Dokument zumindest eine unbeschichtete Referenzfläche angeordnet, wobei ein erster Bildabschnitt der Bildaufnahme dem Dokument zugeordnet ist, wobei ein zweiter Bildabschnitt der Bildaufnahme der unbeschichteten Referenzfläche zugeordnet ist, und wobei der Referenzparameter als Bildparameter des zweiten Bildabschnitts bestimmt wird. Dadurch wird der Vorteil erreicht, dass die Bestimmung des Bildparameters und des Referenzparameters mit einer Bildaufnahme und/oder unter gleichen Bedingungen erfolgen kann.

Gemäß einer Ausführungsform erfolgt die Beleuchtung der Teststruktur mit Infrarotlicht, um eine Infrarotbildaufnahme der Teststruktur in dem Bildsensor zu erhalten. Dadurch wird der Vorteil erreicht, dass eine Beeinflussung der Bildaufnahme aufgrund des sichtbaren Umgebungslichtes vermieden werden kann.

Gemäß der Erfindung ist die Teststruktur ein Gitter, insbesondere ein Transmissionsgitter oder ein Liniengitter mit einen konstanten oder einem variablen Linienabstand. Dadurch wird der Vorteil erreicht, dass das strukturierte Licht, welches durch die Beleuchtung der Teststruktur entsteht, ebenfalls eine regelmäßige Gitterstruktur aufweist. Durch die regelmäßige Struktur des strukturierten Lichtes kann eine effiziente und präzise Ermittlung des Bildparameters erfolgen.

Ist die Teststruktur ein Liniengitter und weist das strukturierte Licht eine entsprechende Linienstruktur auf, so kann ein Bildparameter, insbesondere eine Modulationsübertragungsfunktion, der Linienstruktur ermittelt werden. Ist die Teststruktur ferner ein Liniengitter mit variablem Linienabstand, so kann eine besonders effiziente Ermittlung des Bildparameters, insbesondere der Modulationsübertragungsfunktion, als Funktion der Ortsfrequenz des Liniengitters erfolgen. Das Liniengitter kann ein Rechteckgitter mit horizontalen und vertikalen Gitterlinien sein, die zueinander in einem 90° Winkel stehen können.

Gemäß einer Ausführungsform wird das strukturierte Licht mit einem optischen Filter, insbesondere einem Hochpassfilter, einem Tiefpassfilter oder einem Bandpassfilter, gefiltert oder spektral geformt. Dadurch wird der Vorteil erreicht, dass das Spektrum des strukturierten Lichtes auf einen Detektionsbereich des Bildsensors eingeschränkt werden kann und die ungewollte Detektion von Umgebungslicht, insbesondere gestreutem Weißlicht, vermieden werden kann.

Gemäß einer Ausführungsform ist dem Bildsensor ein Objektiv vorgelagert, mit welchem eine fokussierte Abbildung der Teststruktur auf dem Bildsensors erzeugt wird. Dadurch wird der Vorteil erreicht, dass eine optimal fokussierte Abbildung der Teststruktur in dem Bildsensor erfolgen kann und somit der Bildparameter besonders effizient ermittelt werden kann.

Gemäß der Erfindung wird die Beschichtung detektiert, falls der Bildparameter und der Referenzparameter unterschiedlich sind, insbesondere falls der Bildparameter geringer als der Referenzparameter ist. Dadurch wird der Vorteil erreicht, dass eine effiziente Detektion der Beschichtung über den Vergleich des Bildparameters mit dem Referenzparameter erfolgen kann.

Weitere Ausführungsbeispiele werden Bezug nehmend auf die beiliegenden Zeichnungen näher erläutert. Es zeigen:
- Fig. 1: eine schematische Darstellung einer Vorrichtung zum Prüfen einer Beschichtung eines Dokumentes;
- Fig. 2a: eine schematische Darstellung einer kontrastreichen Bildaufnahme einer Teststruktur;
- Fig. 2b: eine schematische Darstellung einer kontrastarmen Bildaufnahme einer Teststruktur; und
- Fig. 3: eine schematische Darstellung einer Vorrichtung zum Prüfen einer Beschichtung eines Dokumentes.

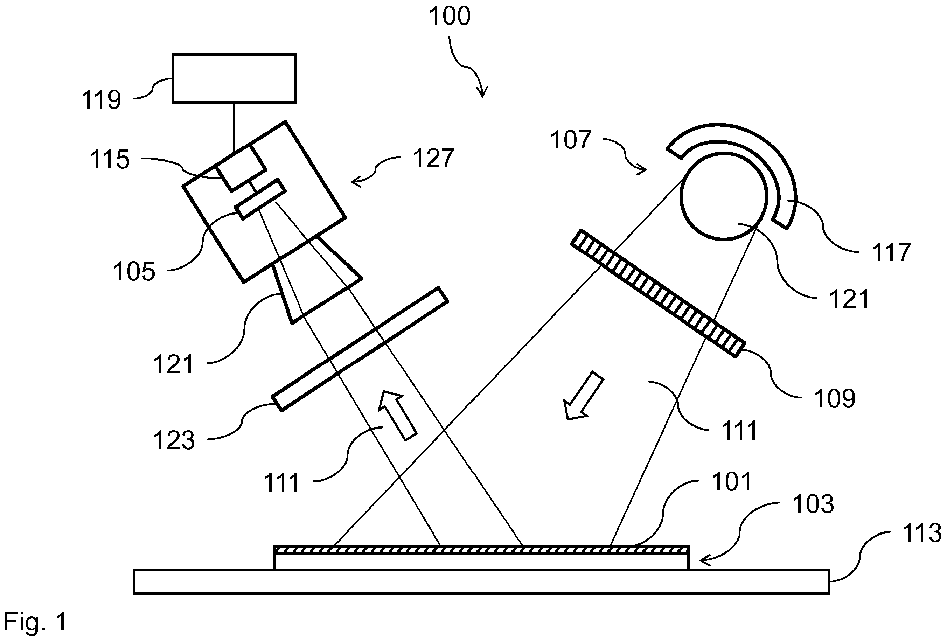

Fig. 1 zeigt eine schematische Darstellung einer Vorrichtung 100 zum Prüfen einer Beschichtung 101 eines Dokumentes 103. Die Vorrichtung 100 umfasst einen Bildsensor 105, eine Beleuchtungseinrichtung 107, eine Teststruktur 109, eine Halterung 113 für das Dokument 103, einen Prozessor 115, eine reflektierende Anordnung 117, eine Anzeige 119, einen optischen Filter 123, ein Objektiv 121, eine Bildkamera 127 und eine Lichtquelle 125.

Die Vorrichtung 100 zum Prüfen der Beschichtung 101 des Dokumentes 103 umfasst den Bildsensor 105 und die Beleuchtungseinrichtung 107 mit der Teststruktur 109, wobei die Beleuchtungseinrichtung 107 ausgebildet ist, die Teststruktur 109 zu beleuchten, um strukturiertes Licht in Richtung des Dokumentes 103 auszusenden. Ferner umfasst die Vorrichtung 100 die im Strahlengang 111 des strukturierten Lichts angeordnete Halterung 113, in welche das Dokument 103 einsetzbar ist, um das strukturierte Licht durch das Dokument 103 in Richtung des Bildsensors 105 zu reflektieren und den Prozessor 115, welcher ausgebildet ist, einen Bildparameter der Bildaufnahme der Teststruktur zu bestimmen, und den Bildparameter mit einem Referenzparameter zu vergleichen, um die Beschichtung 101 des Dokumentes 103 zu prüfen.

Das Dokument 103 kann eines der folgenden Dokumente 103 sein: Identitätsdokument, wie Personalausweis, Reisepass, Zugangskontrollausweis, Berechtigungsausweis, Unternehmensausweis, Steuerzeichen oder Ticket, Führerschein oder Kraftfahrzeugausweis, Zahlungsmittel, beispielsweise eine Bankkarte oder Kreditkarte.

Das Dokument 103 kann Sicherheitsmerkmale, beispielsweise Hologramme, Wasserzeichen, Mikroschriften oder optisch veränderliche Tinte, umfassen. Das Dokument 103 kann ein- oder mehrlagig bzw. papier- und/oder kunststoffbasiert sein. Das Dokument 103 kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen. Ferner kann das Dokument 103 aus Polycarbonat gefertigt sein.

Bei der Beschichtung 101 kann es sich um eine Lackschicht oder einen Lackauftrag zum Schutz vor Verschleiß und/oder Verschmutzung des Dokumentes 103 sowie zur Erhöhung der Lebensdauer handeln. Die Beschichtung 101 kann das Dokument 103 vor UV-Strahlung schützen. Ferner kann die Beschichtung 101 lichttransparent oder teilweise lichttransparent sein.

Die Beleuchtungseinrichtung 107 kann die Lichtquelle 125 umfassen, welche in einem Gehäuse angeordnet ist. Das Gehäuse kann an einer der Teststruktur 109 zugewandten Seite einen Durchbruch zur Emission eines auf die Teststruktur 109 gerichteten Lichtstrahles aufweisen. Die Teststruktur 109 kann an diesem Durchbruch angeordnet sein.

Die Halterung 113 kann eine Ablagefläche mit einer Vertiefung für das Dokument 103 umfassen. Ferner kann die Halterung eine Befestigungsvorrichtung, beispielsweise eine Klammer oder einen Einschub, für das Dokument 103 umfassen. Die Halterung 113 kann in einem solchen Abstand zu der Beleuchtungseinrichtung 107 angeordnet sein, dass das strukturierte Licht das Dokument 103 vollflächig beleuchtet oder nur einen bestimmten Bereich des Dokumentes 103, beispielsweise den Bereich eines Lichtbildes, beleuchtet.

Der Prozessor 115 kann ein Mikroprozessor sein und kann einen Speicher umfassen. Ferner kann der Prozessor 115 in ein an die Vorrichtung 100 angeschlossenes Datenverarbeitungsgerät, beispielsweise ein Desktop-Computer oder ein Laptop, integriert sein.

Die Lichtquelle 125 kann eine Infrarotlichtquelle, beispielsweise eine thermische Lichtquelle, eine LED oder ein Laser, umfassen. Die thermische Lichtquelle kann eine Glühwendel, ein Glühdraht oder ein Glühstab aus einem hitzebeständiges Material, beispielsweise Wolfram oder Siliziumcarbid, umfassen, welche bei Erhitzung über 1000°C Infrarotstrahlung besonders effizient in Form von Wärmestrahlung emittieren können.

Gemäß einer Ausführungsform kann die Beleuchtungseinrichtung 107 die reflektierende Anordnung 117 umfassen. Die reflektierende Anordnung 117 kann ein Parabolspiegel oder ein Hohlspiegel sein, welche die Beleuchtungseinrichtung 125 teilweise umschließen. Ferner kann die reflektierende Anordnung 117 eine Mehrzahl von Spiegeln oder Reflektoren umfassen, welche die Beleuchtungseinrichtung teilweise umschließen. Die reflektierende Anordnung 117 kann das von der Lichtquelle 125 emittierte Licht in Richtung der Teststruktur 109 und des Dokumentes 103 ausrichten, und somit die Intensität des Lichtes im Strahlengang 111 erhöhen.

Die Teststruktur 109 kann ein Gitter, insbesondere ein Liniengitter, sein, welches als Transmissionsgitter ausgebildet ist. Die Teststruktur in Fig. 1 ist beispielsweise ein Transmissionsgitter, welches im Strahlengang 111 zwischen der Lichtquelle 125 und dem Dokument angeordnet ist. Das beim durchstahlen des Transmissionsgitters entstehende strukturierte Licht, kann nach Reflexion an dem Dokument 103 in dem Bildsensor 105 aufgenommen werden, um eine Aufnahme des Transmissionsgitters zu erhalten.

Ferner kann die Teststruktur 109 ein Reflexionsgitter sein. Dieses Reflexionsgitter kann derart in der Vorrichtung 100 angeordnet sein, dass zumindest ein Teil des von der Lichtquelle 125 erzeugten Lichtes auf das Reflexionsgitter trifft und als strukturiertes Licht in Richtung des Dokumentes 103 reflektiert wird, wobei die Reflektion dieses Lichtes an dem Dokument 103 in dem Bildsensor 105 aufgenommen werden kann, um eine Aufnahme des Reflexionsgitters zu erhalten.

Gemäß einer Ausführungsform kann die Vorrichtung 100 den optischen Filter 123 umfassen, um das strukturierte Licht zu filtern oder spektral zu formen. Der optische Filter 123 kann im Strahlengang 111 des strukturierten Lichtes, beispielsweise zwischen der Beleuchtungseinrichtung 107 und dem Dokument 103 oder zwischen dem Dokument 103 und dem Bildsensor 105, angeordnet sein. Ferner kann der optische Filter 123 ein Hochpassfilter, ein Tiefpassfilter oder ein Bandpassfilter sein. Handelt es sich bei der Lichtquelle 125 um eine thermische Lichtquelle und bei dem Bildsensor 105 um einen infrarotsensitiven Bildsensor 105, insbesondere einen nahinfrarotsensitiven Bildsensor 105, so kann der optische Filter 123 ein nahinfrarotdurchlässiger Filter sein, welcher beispielsweise sichtbares Licht, UV-Licht, und/oder Mittel- und Ferninfrarotlicht aus dem Strahlengang 111 herausfiltert.

Gemäß einer Ausführungsform kann der Bildsensor 105 ein Halbleitersensor, insbesondere ein CCD-Sensor, sein. Das Halbleitermaterial des Sensors kann Silizium oder Indium-Gallium-Arsenid sein.

Gemäß einer Ausführungsform kann die Vorrichtung 100 das Objektiv 121 umfassen, wobei das Objektiv 121 dem Bildsensor 105 vorgelagert sein kann. Das Objektiv 121 kann mindestens eine Linse und/oder mindestens einen Spiegel und/oder mindestens ein Beugungsgitter umfassen. Das Objektiv 121 kann eine fokussierte Abbildung der Teststruktur 109 auf dem Bildsensor 105 erzeugen. Hierzu kann das Objektiv 121 in einem Abstand zu dem Bildsensor 105 angeordnet sein, der der Bildweite des Objektivs 121 entspricht. Ferner kann das Objektiv 121 auf eine solche Art und Weise ausgebildet und in der Vorrichtung 100 angeordnet sein, dass die Größe der Abbildung der Teststruktur 109 der Größe des Bildsensors 105 entspricht. Bei optimaler Fokussierung der Abbildung der Teststruktur auf dem Bildsensor 105 kann ein Bildparameter der Abbildung besonders effizient ermittelt werden.

Gemäß einer Ausführungsform können der Bildsensor 105 und das Objektiv 121 in der Bildkamera 127 angeordnet sein. Die Bildkamera 127 kann eine Digitalkamera, eine digitale Spiegelreflexkamera, oder ein Smartphone mit integriertem Bildsensor 105 sein.

Gemäß einer Ausführungsform kann die Bildkamera 127 mit einem Datenverarbeitungsgerät, beispielsweise einem Desktop-Computer oder einen Laptop, zur Übermittlung der Bildaufnahme verbunden sein.

Gemäß einer Ausführungsform kann die Vorrichtung 100 eine Anzeige 119 zum Anzeigen der Detektion der Beschichtung 101 oder eines Beschichtungsfehlers umfassen. Die Anzeige 119 kann eine Leuchtanzeige oder ein Display, beispielsweise ein LCD-Display, ein OLED-Display oder ein Foliendisplay, sein. Gemäß einer weiteren Ausführungsform kann die Anzeige 119 in die Bildkamera 127 oder ein angeschlossenes Datenverarbeitungsgerät integriert sein. Ferner kann die Anzeige 119 mit dem Prozessor 115 verbunden sein.

Gemäß einer Ausführungsform kann die Bildkamera 127 den optischen Filter 123 umfassen.

Gemäß einer weiteren Ausführungsform kann die Bildkamera 127 den Prozessor 115 umfassen und kann die Ermittlung des Bildparameters und der Vergleich mit dem Referenzparameter in der Bildkamera 127 erfolgen.

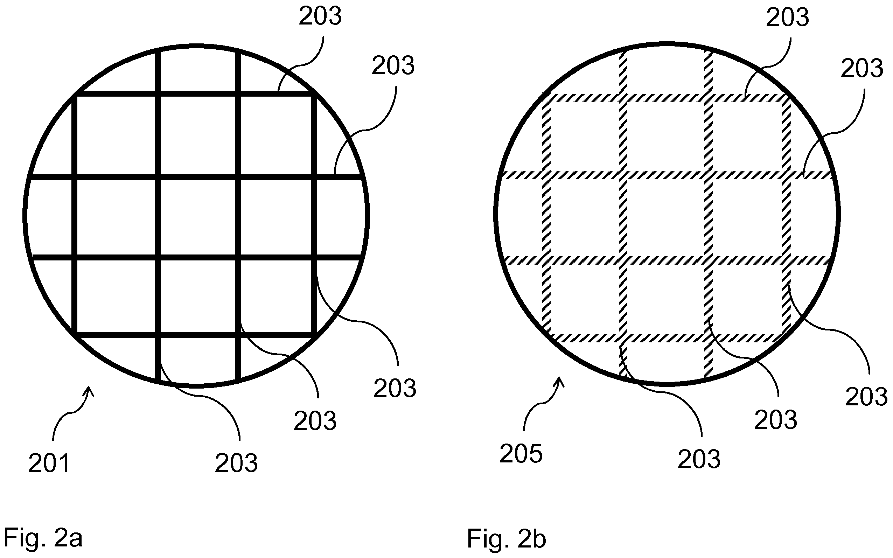

Fig. 2a zeigt eine schematische Darstellung einer kontrastreichen Bildaufnahme 201 einer Teststruktur 109, und Fig. 2b zeigt eine schematische Darstellung einer kontrastarmen Bildaufnahme 205 einer Teststruktur 109.

Die kontrastreiche Bildaufnahme 201 in Fig. 2a, kann eine Bildaufnahme einer Teststruktur 109 sein, welche mit einem Dokument 103 ohne Beschichtung 101 aufgenommen wurde. Die kontrastarme Bildaufnahme 205 in Fig. 2b, kann eine Aufnahme der gleichen Teststruktur wie in Fig. 2a sein, welche mit einem Dokument 103 mit Beschichtung 101 aufgenommen wurde.

Der Kontrast bezieht sich auf Helligkeitsunterschiede in den Bildaufnahmen, etwa den Unterschied zwischen dem dunklen Gitterlinien 203 der Gitterstruktur und den hellen Bereichen zwischen diesen Gitterlinien 203. Die Abnahme des Kontrastes der Gitterstruktur in Fig. 2b kann auch als eine Abnahme der Schärfe in der Bildaufnahme wahrgenommen werden. Ferner kann der Kontrastverlust in Fig. 2b zu einer Verbreiterung der Gitterlinien 203 in der kontrastarmen Bildaufnahme 205 führen

Die Teststrukturen 109 in Fig. 2a und Fig. 2b sind identisch. Bei der Teststruktur 109 handelt es sich um ein Rechteckgitter mit horizontalen und vertikalen Gitterlinien 203. Die runde Abbildung des Rechteckgitters entspricht dem von der Beleuchtungseinrichtung 107 durchstrahlten Teil der Teststruktur 109, welcher auf dem Bildsensor 105 fokussiert abgebildet wird. Der runde Querschnitt kann von einem von der Beleuchtungseinrichtung 107 erzeugten Lichtstrahl mit rundem Durchmesser herrühren.

Der Kontrastverlust in Fig. 2b kann durch die Beschichtung 101 auf dem Dokument 103 verursacht werden. Gründe für den Kontrastverlust können eine Oberflächenrauigkeit der Beschichtung 101 und/oder eine Verschiebung des Fokus der Abbildung aufgrund des durch die Beschichtung 101 verkürzten Strahlenganges 111 und/oder Interferenzeffekte im reflektierten strukturierten Licht aufgrund einer Überlagerung von Reflexionen an der Beschichtungsoberseite und der Beschichtungsunterseite sein

Gemäß einer Ausführungsform kann der Kontrastverlust zur Prüfung und/oder Detektion der Beschichtung 101 genutzt werden. Zu diesem Zweck kann eine Auswertung der Bildaufnahme hinsichtlich eines Bildparameters erfolgen. Bei dem Bildparameter kann es sich um die Bildschärfe, den Bildkontrast, oder die Bildhelligkeit, sowie einen aus mindestens einen dieser Bildparameter berechneten Parameter, beispielsweise eine Modulationsübertragungsfunktion oder eine Fourier-Transformation, handeln.

Bei einer Prüfung der Beschichtung 101 mittels Modulationsübertragungsfunktion, kann eine Modulation der Helligkeit in der Bildaufnahme analysiert werden. Zu diesem Zweck wird meist der Bildkontrast ermittelt. Hierzu kann zunächst die Differenz der Leuchtdichte einer dunklen Struktur in der Bildaufnahme B_{D}, beispielsweise den Gitterlinien 203, und der Leuchtdichte einer hellen Struktur in der Bildaufnahme B_{H}, beispielsweise den hellen Bereich zischen den Gitterlinien 203, ermittelt werden. Der Bildkontrast K kann als das Verhältnis der Differenz und der Summe dieser Leuchtdichten definiert werden, gemäß: K = (B_{H} - B_{D}) / (B_{H} + B_{D}), mit 0 ≤ K ≤ 1.

Bei einem Gitter mit variabler Gitterkonstante, kann der Bildkontrast eine Funktion einer Ortsfrequenz sein. Bei einem Gitter mit konstanter Gitterkonstante, wie in Fig. 2a und Fig. 2b, kann der Bildkontrast eine Konstante sein.

Die Modulationsübertragungsfunktion M entspricht dem Verhältnis des Bildkontrastes K und eines Objektkontrastes O, gemäß: M = K / O. Der Objektkontrast kann auf die gleiche Art und Weise wie der Bildkontrast ermittelt werden, wobei Idealwerte für die Leuchtdichten angenommen werden können, beispielsweise B_{H} = 1 und B_{D} = 0. Ferner kann der Objektkontrast dem Bildkontrast der kontrastreichen Bildaufnahme 201 entsprechen. In diesem Fall ist die Modulationsübertragungsfunktion das Verhältnis der Bildkontraste der kontrastarmen Bildaufnahme 205 und der kontrastreichen Bildaufnahme 201.

Die Beschichtung 101 auf dem Dokument 103 kann über einen Vergleich der Bildparameter, beispielsweise der Bildkontraste und/oder der Modulationsübertragungsfunktionen, der kontrastarmen Bildaufnahme 205 und der kontrastreichen Bildaufnahme 201 detektiert und/oder geprüft werden.

Gemäß einer Ausführungsform kann ein Bildparameter welcher mit einer beschichtungsfreien Referenzfläche aufgenommen wurde, als Referenzparameter verwendet werden. Der Prozessor 115 kann diesen Referenzparameter speichern und für bei jeder neue Messung einen neu ermittelten Bildparameter mit dem Referenzparameter vergleichen.

Gemäß einer Ausführungsform kann der Prozessor 115 konfiguriert sein, eine Beschichtung 101 zu detektieren, falls ein Bildparameter eines zu prüfenden Dokumentes den Referenzparameter um einen Schwellwert überschreitet oder unterschreitet. Ferner kann der Prozessor 115 konfiguriert sein, einen Beschichtungsfehler zu detektieren, falls der Bildparameter des zu prüfenden Dokumentes 103 dem Referenzparameter entspricht, bzw. die Abweichung zwischen Bildparameter und Referenzparameter den Schwellwert unterschreitet.

Gemäß einer weiteren Ausführungsform kann der Prozessor 115 konfiguriert sein eine Eigenschaft der Beschichtung 101, beispielsweise eine Mindestschichtdicke der Beschichtung 101, zu detektieren, falls der Bildparameter eines zu prüfenden Dokumentes 103 einen weiteren Referenzparameter überschreitet oder unterschreitet. Ferner kann der Prozessor 115 konfiguriert sein, aus dem Unterschied zwischen Bildparameter und Referenzparameter eine Schichtdicke der Beschichtung 101 des Dokumentes 103 zu ermitteln.

Gemäß einer weiteren Ausführungsform kann der Bildparameter einem Bildabschnitt der Bildaufnahme zugeordnet sein und kann der Prozessor 115 konfiguriert sein, einen weiteren Bildparameter eines weiteren Bildabschnitts der Bildaufnahme der Teststruktur 109 zu bestimmen und den Bildparameter und den weiteren Bildparameter mit dem Referenzparameter zu vergleichen. Auf diese Art und Weise kann der Prozessor die Verteilung und/oder die Homogenität einer Schichtdicke der Beschichtung 101 des Dokumentes 103 prüfen.

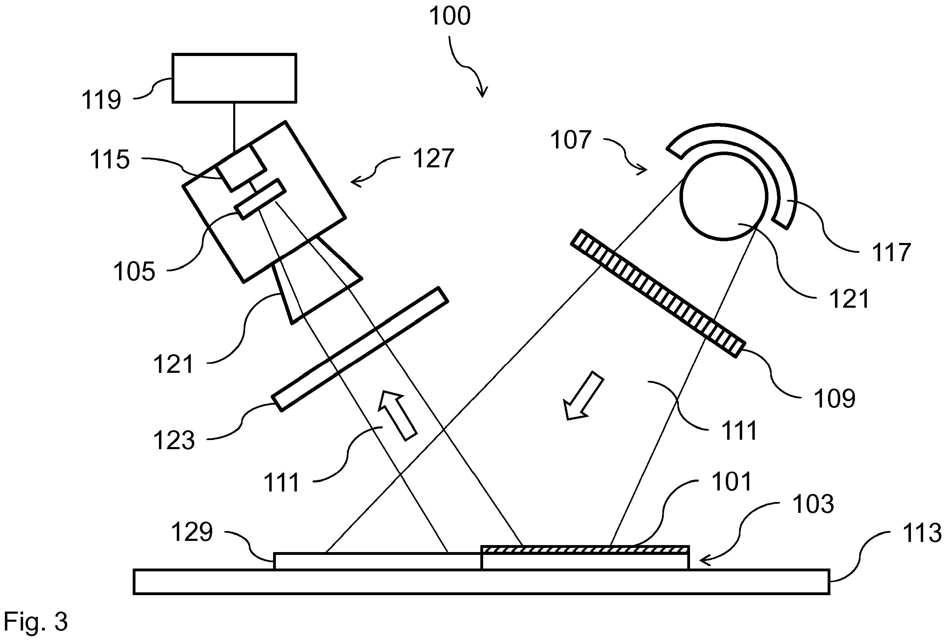

Fig. 3 zeigt eine schematische Darstellung der Vorrichtung 100 zum Prüfen der Beschichtung 101 des Dokumentes 103 gemäß einer Ausführungsform, in der in die Halterung 113 zumindest eine unbeschichtete Referenzfläche 129 benachbart zu dem Dokument 103 einsetzbar bzw. eingesetzt sein kann oder ist.

Durch die Anordnung der unbeschichtete Referenzfläche 129 in der Halterung 113 kann eine Referenzumgebung bzw. eine Referenz für die Bestimmung des Referenzparameters geschaffen werden.

Gemäß einer weiteren Ausbildungsform kann die unbeschichtete Referenzfläche 129 in der Gestalt eines unbeschichteten Dokumentes vorliegen.

Gemäß einer weiteren Ausbildungsform können die unbeschichtete Referenzfläche 129 und das Dokumentes 103 im Strahlengang 111 des strukturierten Lichtes derart angeordnet sein, dass ein erster Bildabschnitt der Bildaufnahme dem Dokument 103 zugeordnet ist und ein zweiter Bildabschnitt der Bildaufnahme der unbeschichteten Referenzfläche 129 zugeordnet ist.

Gemäß einer weiteren Ausführungsform erfolgt die Bestimmung des Bildparameters und des Referenzparameters gleichzeitig oder differentiell aus der Bildaufnahme.

Gemäß einer weiteren Ausführungsform erfolgt die Bestimmung des Bildparameters und des Referenzparameters aus einer Bildaufnahme, oder erfolgt die Bestimmung des Bildparameters aus einer ersten Bildaufnahme und die Bestimmung des Referenzparameters aus einer zweiten Bildaufnahme.

Gemäß einer weiteren Ausführungsform kann die Ortsauflösung des Bildparameters durch eine Strukturgröße der Teststruktur 109 beeinflusst werden. Ferner kann durch eine Verkleinerung der Strukturgröße der Teststruktur 109, beispielsweise durch eine Verkleinerung der Abstände der Gitterlinien 203 eines Gitters, die Ortsauflösung des Bildparameters erhöht werden.

### Bezugszeichenliste

- 100: Vorrichtung
- 101: Beschichtung
- 103: Dokument
- 105: Bildsensor
- 107: Beleuchtungseinrichtung
- 109: Teststruktur
- 111: Strahlengang
- 113: Halterung
- 115: Prozessor
- 117: reflektierende Anordnung
- 119: Anzeige
- 121: Objektiv
- 123: optischer Filter
- 125: Lichtquelle
- 127: Bildkamera
- 129: unbeschichtete Referenzfläche

- 201: kontrastreiche Bildaufnahme
- 203: Gitterlinie
- 205: kontrastarme Bildaufnahme

## Patentansprüche

1. Vorrichtung (100) zum Prüfen einer Beschichtung (101) eines Dokumentes (103), mit:
einem Bildsensor (105);
einer Beleuchtungseinrichtung (107) mit einer Teststruktur (109), wobei die Beleuchtungseinrichtung (107) ausgebildet ist, die Teststruktur (109) zu beleuchten, um strukturiertes Licht in Richtung des Dokumentes (103) auszusenden;
einer im Strahlengang (111) des strukturierten Lichts angeordneten Halterung (113), in welche das Dokument (103) einsetzbar ist, um das strukturierte Licht durch das Dokument (103) in Richtung des Bildsensors (105) zu reflektieren;
einem Prozessor (115), welcher ausgebildet ist, einen Bildparameter der Bildaufnahme der Teststruktur (109) zu bestimmen, und den Bildparameter mit einem Referenzparameter zu vergleichen, um die Beschichtung (101) des Dokumentes (103) zu prüfen,
wobei die Teststruktur (109) ein Gitter ist,
wobei der Prozessor (115) ausgebildet ist, die Beschichtung (101) zu detektieren, falls der Bildparameter und der Referenzparameter unterschiedlich sind,
wobei der Prozessor (115) ausgebildet ist, aus dem Unterschied zwischen dem Bildparameter und dem Referenzparameter eine Schichtdicke der Beschichtung (101) des Dokumentes (103) zu ermitteln,
wobei der Bildparameter einem Bildabschnitt der Bildaufnahme zugeordnet ist, wobei der Prozessor (115) ausgebildet ist, einen weiteren Bildparameter eines weiteren Bildabschnitts der Bildaufnahme der Teststruktur (109) zu bestimmen, und wobei der Prozessor (115) ausgebildet ist, den Bildparameter und den weiteren Bildparameter mit dem Referenzparameter zu vergleichen, um die Verteilung oder die Homogenität einer Schichtdicke der Beschichtung (101) des Dokumentes (103) zu prüfen,
wobei in die Halterung (113) benachbart zum Dokument zumindest eine unbeschichtete Referenzfläche (129) einsetzbar ist, wobei ein erster Bildabschnitt der Bildaufnahme dem Dokument (103) zugeordnet ist, wobei ein zweiter Bildabschnitt der Bildaufnahme der unbeschichteten Referenzfläche (129) zugeordnet ist, und wobei der Prozessor (115) ausgebildet ist, den Referenzparameter als Bildparameter des zweiten Bildabschnitts zu bestimmen, wobei die unbeschichtete Referenzfläche (129) ein Dokument ohne Beschichtung ist,
wobei der jeweilige Bildparameter der folgende Bildparamater ist:
Modulationsübertragungsfunktion, wobei der Prozessor (115) ausgebildet ist, einen Kontrastverlust in der Abbildung der Teststruktur (109) zu ermitteln, wobei der Prozessor (115) ausgebildet ist, hierzu einen Kontrastverlauf in der Abbildung der Teststruktur (115) zu analysieren, wobei diese Analyse mit dem Dokument mit der Beschichtung (101) und mit dem Dokument ohne Beschichtung vorgenommen wird, wobei der Bildparameter der zumindest einen unbeschichteten Referenzfläche (129) bei dieser Analyse als Referenzparameter verwendet wird.

2. Vorrichtung (100) nach Anspruch 1, wobei die Beleuchtungseinrichtung (107) eine Infrarotlichtquelle, insbesondere eine thermische Infrarotlichtquelle, umfasst, und wobei der Bildsensor (105) ein infrarotsensitiver Bildsensor (105) ist.

3. Vorrichtung (100) nach Anspruch 1 oder 2, wobei die Beleuchtungseinrichtung (107) eine reflektierende Anordnung (117), insbesondere eine Parabolspiegelanordnung, umfasst, um das strukturierte Licht auszurichten.

4. Vorrichtung (100) nach einem der vorstehenden Ansprüche, wobei das Gitter ein Transmissionsgitter oder ein Liniengitter mit einen konstanten oder einem variablen Linienabstand.

5. Vorrichtung (100) nach einem der vorstehenden Ansprüche, wobei die Vorrichtung (100) einen optischen Filter (123), insbesondere einen Hochpassfilter, einen Tiefpassfilter oder einen Bandpassfilter, umfasst, um das strukturierte Licht zu filtern oder spektral zu formen.

6. Vorrichtung (100) nach einem der vorstehenden Ansprüche, wobei die Vorrichtung ein Objektiv (121) umfasst, welches dem Bildsensor (105) vorgelagert ist, und mit welchem eine fokussierte Abbildung der Teststruktur auf dem Bildsensor erzeugbar ist.

7. Vorrichtung (100) nach einem der vorstehenden Ansprüche, wobei der Prozessor (115) ausgebildet ist, die Beschichtung (101) zu detektieren, falls der Bildparameter geringer als der Referenzparameter ist.

8. Vorrichtung (100) nach einem der vorstehenden Ansprüche, wobei die Vorrichtung eine Anzeige (119) zum Anzeigen einer Detektion der Beschichtung (101) oder eines Beschichtungsfehlers aufweist.

9. Vorrichtung (100) nach einem der vorstehenden Ansprüche, wobei der jeweilige Bildparameter zumindest einer der folgenden Bildparamater ist: Bildschärfe, Bildkontrast, Bildhelligkeit, Fourier-Transformation.

10. Verfahren zum Prüfen einer Beschichtung (101) eines Dokumentes (103), mit:
Beleuchten einer Teststruktur (109), um strukturiertes Licht in Richtung des Dokumentes (103) auszusenden;
Reflektieren des strukturierten Lichts durch das Dokument (103) in Richtung einer Bildsensors (105);
Aufnehmen des reflektierten strukturierten Lichts mit einem Bildsensor (105), um eine Bildaufnahme der Teststruktur (109) zu erhalten;
Bestimmen eines Bildparameters der Bildaufnahme; und
Vergleichen des Bildparameters mit einem Referenzparameter, um die Beschichtung (101) des Dokumentes (103) zu prüfen,
wobei die Teststruktur (109) ein Gitter ist,
wobei die Beschichtung (101) detektiert wird, falls der Bildparameter und der Referenzparameter unterschiedlich sind,
wobei aus dem Unterschied zwischen dem Bildparameter und dem Referenzparameter eine Schichtdicke der Beschichtung des Dokumentes ermittelt wird,
wobei der Bildparameter einem Bildabschnitt der Bildaufnahme zugeordnet ist, wobei ein weiterer Bildparameter eines zweiten Bildabschnitts der Bildaufnahme der Teststruktur (109) bestimmt wird, und wobei der Bildparameter und der weitere Bildparameter mit dem Referenzparameter verglichen werden, um die Verteilung oder die Homogenität einer Schichtdicke der Beschichtung (101) des Dokumentes (103) zu prüfen,
wobei der Referenzparameter ein Bildparameter einer Bildaufnahme einer beschichtungsfreien Referenzfläche (129), wobei die unbeschichtete Referenzfläche (129) ein Dokument ohne Beschichtung ist,
wobei benachbart zum Dokument zumindest eine unbeschichtete Referenzfläche (129) angeordnet wird, wobei ein erster Bildabschnitt der Bildaufnahme dem Dokument zugeordnet ist, wobei ein zweiter Bildabschnitt der Bildaufnahme der unbeschichteten Referenzfläche (129) zugeordnet ist, und wobei der Referenzparameter als Bildparameter des zweiten Bildabschnitts bestimmt wird,
wobei der jeweilige Bildparameter zumindest einer der folgenden Bildparamater ist: Modulationsübertragungsfunktion,
wobei ein Kontrastverlust in der Abbildung der Teststruktur (109) ermittelt wird, wobei hierzu ein Kontrastverlauf in der Abbildung der Teststruktur (115) ermittelt wird, wobei diese Analyse mit dem Dokument mit der Beschichtung (101) und mit dem Dokument ohne Beschichtung vorgenommen wird, wobei der Bildparameter der zumindest einen unbeschichteten Referenzfläche (129) bei dieser Analyse als Referenzparameter verwendet wird.

11. Verfahren nach Anspruch 10, wobei der Referenzparameter ein Bildparameter einer Bildaufnahme des Identifikationsdokumentes ohne Beschichtung ist.

12. Verfahren nach Anspruch 10 oder 11, wobei das Gitter ein Transmissionsgitter oder ein Liniengitter mit einen konstanten oder einem variablen Linienabstand, ist.

13. Verfahren nach einem der Ansprüche 10 bis 12, wobei das strukturierte Licht mit einem optischen Filter (123), insbesondere einem Hochpassfilter, einem Tiefpassfilter oder einem Bandpassfilter, gefiltert oder spektral geformt wird.

14. Verfahren nach einem der Ansprüche 10 bis 13, wobei dem Bildsensor (105) ein Objektiv (121) vorgelagert ist, mit welchem eine fokussierte Abbildung der Teststruktur (109) auf dem Bildsensor (105) erzeugt wird.

15. Verfahren nach einem der Ansprüche 10 bis 14, wobei die Beschichtung (101) detektiert wird, falls der Bildparameter geringer als der Referenzparameter ist.

## Claims

1. A device (100) for testing a coating (101) of a document (103), comprising:
an image sensor (105);
an illumination device (107) comprising a test structure (109), wherein the illumination device (107) is configured to illuminate the test structure (109) in order to emit structured light towards the document (103);
a holder (113) arranged in the beam path (111) of the structured light, wherein the document (103) is insertable into the holder in order to reflect the structured light through the document (103) towards the image sensor (105);
a processor (115), which is configured to determine an image parameter of the image recording of the test structure (109) and to compare the image parameter with a reference parameter in order to test the coating (101) of the document (103),
wherein the test structure (109) is a grating,
wherein the processor (115) is configured to detect the coating (101) if the image parameter and the reference parameter are different,
wherein the processor (115) is configured to determine a layer thickness of the coating (101) of the document (103) based on the difference between the image parameter and the reference parameter,
wherein the image parameter is associated with an image section of the image recording, wherein the processor (115) is configured to determine a further image parameter of a further image section of the image recording of the test structure (109), and wherein the processor (115) is configured to compare the image parameter and the further image parameter with the reference parameter in order to test the distribution or the homogeneity of a layer thickness of the coating (101) of the document (103),
wherein at least one uncoated reference surface (129) is insertable into the holder (113) adjacent to the document, wherein a first image section of the image recording is associated with the document (103), wherein a second image section of the image recording is associated with the uncoated reference surface (129), and wherein the processor (115) is configured to determine the reference parameter as image parameter of the second image section, wherein the uncoated reference surface (129) is a document without a coating,
where the respective image parameter is the following image parameter: modulation transfer function,
wherein the processor (115) is configured to determine a loss of contrast in the image of the test structure (109), wherein the processor (115) is configured to analyze a contrast curve in the image of the test structure (115) for this purpose, wherein this analysis is performed with the document with the coating (101) and with the document without coating, wherein the image parameter of the at least one uncoated reference surface (129) is used as a reference parameter in this analysis.

2. The device (100) according to claim 1, wherein the illumination device (107) comprises an infrared light source, in particular a thermal infrared light source, and wherein the image sensor (105) is an infrared-sensitive image sensor (105).

3. The device (100) according to claim 1 or 2, wherein the illumination device (107) comprises a reflecting arrangement (117), in particular a parabolic mirror arrangement, in order to align the structured light.

4. The device (100) according to any one of the preceding claims, wherein the grating is a transmission grating or a line grating with a constant or a variable line spacing.

5. The device (100) according to any one of the preceding claims, wherein the device (100) comprises an optical filter (123), in particular a high-pass filter, a low-pass filter or a band-pass filter, in order to filter or spectrally shape the structured light.

6. The device (100) according to any one of the preceding claims, wherein the device comprises a lens (121) which is in front of the image sensor (105) and with which lens a focused image of the test structure can be generated on the image sensor.

7. The device (100) according to any one of the preceding claims, wherein the processor (115) is configured to detect the coating (101) if the image parameter is less than the reference parameter.

8. The device (100) according to any one of the preceding claims, wherein the device comprises a display (119) for displaying a detection of the coating (101) or a coating defect.

9. The device (100) according to any one of the preceding claims, wherein the respective image parameter is at least one of the following image parameters: image sharpness, image contrast, image brightness, Fourier transformation.

10. A method for testing a coating (101) of a document (103), comprising:
illuminating a test structure (109) to emit structured light towards the document (103);
reflecting the structured light through the document (103) towards an image sensor (105);
recording the reflected structured light with an image sensor (105) in order to obtain an image recording of the test structure (109);
determining an image parameter of the image recording; and
comparing the image parameter with a reference parameter in order to test the coating (101) of the document (103),
wherein the test structure (109) is a grating,
wherein the coating (101) is detected if the image parameter and the reference parameter are different,
wherein a layer thickness of the coating of the document is determined based on the difference between the image parameter and the reference parameter,
wherein the image parameter is associated with an image section of the image recording, wherein a further image parameter of a second image section of the image recording of the test structure (109) is determined, and wherein the image parameter and the further image parameter are compared with the reference parameter in order to test the distribution or the homogeneity of a layer thickness of the coating (101) of the document (103),
wherein the reference parameter is an image parameter of an image recording of a uncoated reference surface (129), wherein the uncoated reference surface (129) is a document without a coating,
wherein at least one uncoated reference surface (129) is arranged adjacent to the document, wherein a first image section of the image recording is associated with the document, wherein a second image section of the image recording is associated with the uncoated reference area (129), and wherein the reference parameter is determined as the image parameter of the second image section,
where the respective image parameter is at least one of the following image parameters: modulation transfer function,
wherein a loss of contrast in the image of the test structure (109) is determined, wherein a contrast curve is determined in the image of the test structure (115) for this purpose, wherein this analysis is performed with the document with the coating (101) and with the document without coating, wherein the image parameter of the at least one uncoated reference surface (129) is used as a reference parameter in this analysis.

11. The method according to claim 10, wherein the reference parameter is an image parameter of an image recording of the identification document without a coating.

12. The method according to claim 10 or 11, wherein the grating is a transmission grating or a line grating with a constant or a variable line spacing.

13. The method according to any one of claims 10 to 12, wherein the structured light is filtered or spectrally shaped with an optical filter (123), in particular a high-pass filter, a low-pass filter or a band-pass filter.

14. The method according to any one of claims 10 to 13, wherein a lens (121) is in front of the image sensor (105) with which lens a focused image of the test structure (109) is generated on the image sensor (105).

15. The method according to any one of claims 10 to 14, wherein the coating (101) is detected if the image parameter is less than the reference parameter.

## Revendications

1. Dispositif (100) pour tester un revêtement (101) d'un document (103), comprenant:
un capteur d'image (105);
un dispositif d'éclairage (107) comprenant une structure de test (109), dans lequel le dispositif d'éclairage (107) est configuré pour éclairer la structure de test (109) afin d'émettre une lumière structurée en direction du document (103);
un support (113) disposé dans le trajet du faisceau (111) de la lumière structurée, support dans lequel le document (103) peut être inséré afin de réfléchir la lumière structurée à travers le document (103) en direction du capteur d'image (105);
un processeur (115), qui est configuré pour déterminer un paramètre d'image de l'enregistrement d'image de la structure de test (109) et pour comparer le paramètre d'image avec un paramètre de référence afin de tester le revêtement (101) du document (103),
dans lequel la structure de test (109) est une grille,
dans lequel le processeur (115) est configuré pour détecter le revêtement (101) si le paramètre d'image et le paramètre de référence sont différents,
dans lequel le processeur (115) est configuré pour déterminer une épaisseur de couche du revêtement (101) du document (103) à partir de la différence entre le paramètre d'image et le paramètre de référence,
dans lequel le paramètre d'image est affecté à une section d'image de l'enregistrement d'image, dans lequel le processeur (115) est configuré pour déterminer un autre paramètre d'image d'une autre section d'image de l'enregistrement d'image de la structure de test (109), et dans lequel le processeur (115) est configuré pour comparer le paramètre d'image et l'autre paramètre d'image avec le paramètre de référence afin de tester la répartition ou l'homogénéité d'une épaisseur de couche du revêtement (101) du document (103),
dans lequel au moins une surface de référence non revêtue (129) peut être insérée dans le support (113) adjacent au document, dans lequel une première section d'image de l'enregistrement d'image est attribuée au document (103), dans lequel une deuxième section d'image de l'image l'enregistrement est attribué à la surface de référence non revêtue (129), et dans lequel le processeur (115) est configuré pour déterminer le paramètre de référence en tant que paramètre d'image de la deuxième section d'image, dans lequel la surface de référence non revêtue (129) est un document sans revêtement,
où le paramètre d'image respectif est le paramètre d'image suivant: fonction de transfert de modulation,
dans lequel le processeur (115) est configuré pour déterminer une perte de contraste dans l'image de la structure de test (109), dans lequel le processeur (115) est configuré pour analyser une courbe de contraste dans l'image de la structure de test (115) pour cette dans ce but, dans lequel cette analyse est effectuée avec le document avec le revêtement (101) et avec le document sans revêtement, dans lequel le paramètre d'image de la au moins une surface de référence non revêtue (129) est utilisé comme paramètre de référence dans cette analyse.

2. Dispositif (100) selon la revendication 1, dans lequel le dispositif d'éclairage (107) comprend une source de lumière infrarouge, notamment une source de lumière infrarouge thermique, et dans lequel le capteur d'image (105) est un capteur d'image sensible à l'infrarouge (105).

3. Dispositif (100) selon la revendication 1 ou 2, dans lequel le dispositif d'éclairage (107) comprend un agencement réfléchissant (117), notamment un agencement de miroirs paraboliques, pour aligner la lumière structurée.

4. Dispositif (100) selon l'une quelconque des revendications précédentes, dans lequel la grille est une grille de transmission ou une grille de lignes à interligne constant ou variable.

5. Dispositif (100) selon l'une quelconque des revendications précédentes, dans lequel le dispositif (100) comprend un filtre optique (123), notamment un filtre passe-haut, un filtre passe-bas ou un filtre passe-bande, afin de filtrer ou mettre en forme spectralement la lumière structurée.

6. Dispositif (100) selon l'une quelconque des revendications précédentes, dans lequel le dispositif comprend une lentille (121) qui est devant le capteur d'image (105) et avec laquelle lentille une image focalisée de la structure de test peut être générée. sur le capteur d'image.

7. Dispositif (100) selon l'une quelconque des revendications précédentes, dans lequel le processeur (115) est configuré pour détecter le revêtement (101) si le paramètre d'image est inférieur au paramètre de référence.

8. Dispositif (100) selon l'une quelconque des revendications précédentes, dans lequel le dispositif comprend un affichage (119) pour afficher une détection du revêtement (101) ou un défaut de revêtement.

9. Dispositif (100) selon l'une quelconque des revendications précédentes, dans lequel le paramètre d'image respectif est au moins l'un des paramètres d'image suivants: netteté d'image, contraste d'image, luminosité d'image, transformation de Fourier.

10. Procédé pour tester un revêtement (101) d'un document (103), comprenant:
éclairer une structure de test (109) pour émettre une lumière structurée en direction du document (103);
réfléchir la lumière structurée à travers le document (103) en direction d'un capteur d'image (105);
enregistrer la lumière structurée réfléchie avec un capteur d'image (105) afin d'obtenir un enregistrement d'image de la structure de test (109);
déterminer un paramètre d'image de l'enregistrement d'image; et
comparer le paramètre d'image à un paramètre de référence pour tester le revêtement (101) du document (103),
dans lequel la structure de test (109) est une grille,
dans lequel le revêtement (101) est détecté si le paramètre d'image et le paramètre de référence sont différents,
dans lequel une épaisseur de couche du revêtement du document est déterminée à partir de la différence entre le paramètre d'image et le paramètre de référence,
dans lequel le paramètre d'image est affecté à une section d'image de l'enregistrement d'image, dans lequel un autre paramètre d'image d'une deuxième section d'image de l'enregistrement d'image de la structure de test (109) est déterminé, et dans lequel le paramètre d'image et l'autre paramètre d'image sont comparé au paramètre de référence pour tester la répartition ou l'homogénéité d'une épaisseur de couche du revêtement (101) du document (103),
dans lequel le paramètre de référence est un paramètre d'image d'un enregistrement d'image d'une surface de référence non revêtue (129), dans lequel la surface de référence non revêtue (129) est un document sans revêtement,
dans lequel au moins une surface de référence non revêtue (129) est agencée adjacente au document, dans lequel une première section d'image de l'enregistrement d'image est attribuée au document, dans lequel une deuxième section d'image de l'enregistrement d'image est attribuée à la zone de référence non revêtue (129), et dans lequel le paramètre de référence est déterminé en tant que paramètre d'image de la deuxième section d'image,
où le paramètre d'image respectif est au moins l'un des paramètres d'image suivants: fonction de transfert de modulation,
dans lequel une perte de contraste dans l'image de la structure de test (109) est déterminée, dans lequel une courbe de contraste est déterminée dans l'image de la structure de test (115) à cet effet, dans lequel cette analyse est effectuée avec le document avec le revêtement (101) et avec le document sans revêtement, dans lequel le paramètre d'image de la au moins une surface de référence non revêtue (129) est utilisé comme paramètre de référence dans cette analyse.

11. Procédé selon la revendication 10, dans lequel le paramètre de référence est un paramètre d'image d'un enregistrement d'image du document d'identification sans revêtement.

12. Procédé selon la revendication 10 ou 11, dans lequel la grille est une grille de transmission ou une grille de lignes à interligne constant ou variable.

13. Procédé selon l'une quelconque des revendications 10 à 12, dans lequel la lumière structurée est filtrée ou mise en forme spectralement avec un filtre optique (123), notamment un filtre passe-haut, un filtre passe-bas ou un filtre passe-bande..

14. Procédé selon l'une quelconque des revendications 10 à 13, dans lequel une lentille (121) est devant le capteur d'image (105) avec laquelle lentille une image focalisée de la structure de test (109) est générée sur le capteur d'image (105).

15. Procédé selon l'une quelconque des revendications 10 à 14, dans lequel le revêtement (101) est détecté si le paramètre d'image est inférieur au paramètre de référence.
